# EUROPEAN PATENT SPECIFICATION

(11) **EP 4 441 554 B1**
(45) Date of publication and mention of the grant of the patent: **18.11.2026**
(21) Application number: 22821683.4
(22) Date of filing: 02.12.2022
(51) Int. Cl.: G02B 27/09, B23K 26/064, B23K 26/062

(54) **LASER MARKING SYSTEM**
LASERMARKIERUNGSSYSTEM
SYSTÈME DE MARQUAGE LASER

(30) Priority: 03.12.2021 NL 2030028
(43) Date of publication of application: 09.10.2024
(73) Proprietor: Inphocal B.V., 5656 AE Eindhoven (NL)
(72) Inventor: BOERKAMP, Martijn Joseph, 5656 AE Eindhoven (NL); VAN DEN BOOM, Floor Anna, 5656 AE Eindhoven (NL)
(74) Representative: V.O.
(86) International application number: PCT/NL2022/050694
(87) International publication number: WO 2023/101553

(56) References cited:
- CN-B- 108 941 896
- US-A1- 2007 140 092
- US-A1- 2010 065 537
- US-A1- 2011 028 953
- US-A1- 2013 306 609
- US-A1- 2016 147 075
- SHAFER ET AL: "Gaussian to flat-top intensity distributing lens", OPTICS AND LASER TECHNOLOGY, ELSEVIER SCIENCE PUBLISHERS BV., AMSTERDAM, NL, vol. 14, no. 3, 1 June 1982 (1982-06-01), pages 159 - 160, XP024516812, ISSN: 0030-3992, [retrieved on 19820601], DOI: 10.1016/0030-3992(82)90113-X

## Description

The present application concerns a laser system, in particular used for marking an object. Laser marking systems known from the art comprise a laser source and an optical system configured to generate a laser beam suitable for the marking a target surface.

Laser marking is understood as a category of methods wherein a laser is used to leave marks on an object. In some cases this may include one or more of engraving, annealing, staining (e.g. a color change due to chemical/molecular alteration), charring, foaming, melting, removing, ablation, et cetera. In other or further cases, this may include surfacing techniques such as printing, hot-branding and laser bonding. In other or further cases, laser marking can be used to apply a code or label that is marked onto an object. Preferably, the laser marking is applied in such a way that structural damage to the marked object is avoided.

Lasers are used because they can illuminate relatively small, well-defined areas of a target surface with a relatively high power (wherein power can be expressed in Watt) or, alternatively said, a relatively high-power density (wherein power density can be expressed in W/m²). In the context of the present disclosure optical power per unit area is also referred to as the power density and the optical power in a three-dimensional volume is referred to as the volumetric power density, which may be expressed in W/m³.

Additionally, the area of the target surface illuminated by the laser beam can be changed rapidly by, for example, deflecting the laser beam, and whether the target surface is illuminated at all can also be changed rapidly, for example by turning off the laser source or deflecting the laser beam in a different direction entirely.

This type of laser marking is typically achieved by providing a laser source configured to emit a laser beam (i.e. a beam of coherent light), and a positive lens configured to focus this laser beam onto a target. The laser beam is emitted along an optical axis, towards the lens. After traveling through the lens, the laser beam converges towards the focal point of said lens. It is at this focal point that the area of the target surface illuminated by the laser beam is the smallest and has the largest power density. As the point on the optical axis at which this focal point will occur (once the laser beam is emitted, that is) the target surface is pre-emptively arranged such that it coincides with this focal point and/or this point on the optical axis. When the target surface were to be positioned farther away from, or closer to the lens than the focal point, the illuminated area increases, and the power density decreases rapidly.

When using such systems, the target surface is required to be kept within approximately +/- 1 mm of the focal point to ensure it is indeed illuminated with approximately this desired power density. That is, there is a range of positions along the optical axis on which the target surface can be arranged such that it is illuminated with a sufficiently small area and with the desired power density. This range is also called the working range and the length of the working range is also called the focus depth. In this particular example, the focus depth equals twice the aforementioned margin of error, i.e. equals +/-2 mm. In many applications such a small focus depth is considered extremely inconvenient, if not unacceptably small.

Similarly, there is a range of positions defined by offsets perpendicular to the optical axis on which the target surface can be arranged, at which the laser beam, when deflected towards the target surface, can still accurately illuminate the target surface. This range of positions is also referred to as the scan field. The skilled person will be aware of that the extent of this scan field depends on the aforementioned focus depth. Since the focus depth of systems known in the art is limited, these systems are often provided with further optical elements in an effort to increase the scan field, making the systems much more complex.

When such laser marking systems are used to illuminate (at least part of) the target surface, the targets in question may be arranged in varying positions, or the targets may vary in shape and/or size. These differences between targets may result in the position of the target surface being, when considered along the optical axis, outside of the margin of error and outside of the range of positions in which the laser beam is in focus.

As background, US 2010/0065537 A1 describes a condensing optical system that condenses a laser beam into a small spot with a focal depth demonstrated in a range between 80 and 212 µm. The laser beam is intended for cutting a workpiece made of a brittle material such as single crystal diamond or form a groove in a surface of the brittle material with the condensed laser beam. The condensing optical system includes first optical means having a light condensing function, second optical means having a spherical aberration producing function, a pair of galvanometer mirrors serving as laser beam deflecting means, and a galvanometer scanner that drives the galvanometer mirrors. The first optical means having the light condensing function is an fθ lens that condenses the laser beam deflected by the galvanometer mirrors to a work position of the workpiece. The second optical means having the aberration producing function is an aspherical phase plate arranged between the bent mirrors and the front galvanometer mirror. Alternatively, the second optical means may be a diffractive phase plate. Unfortunately, the focal depth of the known optical system is still relatively limited. Furthermore, the fθ lens used in the known system essentially limits the capability to planar workpieces. Accordingly, this prior art system may be difficult to use in laser marking applications especially for marking targets having varying shapes, and sizes, and which may be placed at various positions.

As further background, SHAFER describes a Gaussian to flat-top intensity distributing lens. [DOI: 10.1016/0030-3992(82)90113-X]. Similarly, US 2007/0140092 A1 describes an optical system configured for projecting a laser-beam, initially having a Gaussian intensity profile, into an image plane such that, in the image plane, the intensity profile in the beam is quasi-flat-topped. According to this prior art, the beam profile is preferable for applications such as laser welding, laser material processing, and laser tissue treatment for which a broader, flat-topped or quasi-flat-topped intensity profile would be preferable. Similarly, US 2016/0147075 A1 describes a device configured such that a diameter of the laser beam on the workpiece can be varied while maintaining the intensity profile with a stationary workpiece. This device is used for the processing of a workpiece with a preferably focused laser beam which has a top-hat intensity profile at one or more specific positions in the laser beam, to arrange the workpiece surface to be processed at this or one of these positions in the laser beam. Unfortunately, because the flat top profile is relatively large and only achieved at a specific position along the focus volume, this makes these prior art systems less suitable for applications such as laser marking.

As further background, US 2011/0028953 A1 describes a laser system for ophthalmic surgery; and CN108941896A describes a laser focusing device comprising a zoom lens set, a fixed lens set and a focusing mechanism. These prior art documents teach various measures to minimize aberrations.

As further background, US 2013/0306609 A1 describes a laser cutting apparatus which includes a laser processing head that receives a laser beam emitted by a laser oscillator and that uses a spherical lens for converging the laser beam so as to cause the intensity distribution of the laser beam to have a caldera-like shape, in which the intensity of the laser beam is higher in a peripheral area than in a central area, at the position of a workpiece. Unfortunately, the intensity distribution of this prior art apparatus may be less suitable for applications such as laser marking.

It is an object to provide a laser system suitable for marking targets having varying shapes, and sizes, and which are placed at various positions.

It is a further object to provide a laser system providing high quality markings in a more efficient, fast and/or reliable manner.

At least one of these or other objects may at least partially be achieved in a laser system for processing an object, in particular marking a surface of the object, according to the invention as defined in appended claim 1.

In some embodiments the optical system is configured to introduce spherical aberrations in the laser beam causing the essentially non-diffractive beam to show a concentric ring pattern in the central focus volume. The concentric ring pattern may vary over the working range along the optical axis.

In some embodiments, the central focus volume at least partially coincides with the target surface. In some embodiments, and/or wherein at least one of the non-diffractive beam and target surface is moving during the application of the marking on the target surface.

In a preferred embodiment, the laser source defines a first optical axis and is further configured to emit the laser beam along the first optical axis, and wherein the optical axis defined by the optical system is a second optical axis, the first and second optical axes optionally being mutually aligned. When the first and second optical axis coincide in this manner, the laser is shaped efficiently (i.e. with relatively little stray light).

In a preferred embodiment, the central focus volume is determined by the interference pattern produced in the laser beam exiting the second lens and/or wherein the optical system is configured to generate an interference pattern in the central focus volume so that the concentric laser beam maintains an essentially constant intensity as it propagates.

The first and second optical elements may be implemented in numerous ways. The second optical element may be implemented as a positive lens or a concave mirror.

In some of these embodiments the first optical element is implemented as a positive lens or a concave mirror. In this case, the distance between the first optical element and the second optical element is preferably larger than the sum of the focus length of the first optical element and the focus length of the second optical element.

Alternatively, the first optical element is implemented as a negative lens or a convex mirror. In this case, the distance between the first optical element and the second optical element is preferably smaller than the difference between the focus length of the first optical element and the focus length of the second optical element.

The distance between the first and second optical element may be defined in a number of ways. Preferably, the distance is defined as a distance between an optical centre of the first optical element and an optical centre of the second optical element. This definition does not directly depend on the practical size and/or shape of the optical element and therefore makes it easier to exchange optical elements without changing the first distance.

In a preferred embodiment, the system further comprises at least one actuator for controlling the distance, preferably by displacing at least one of the first optical element and the second optical element along the optical axis. In such embodiments, the laser beam preferably exits the optical system via an exit surface of the second optical element and the at least one actuator is preferably configured to displace the first optical element along the optical axis. This ensures that the distance between (the last element of) the optical system and the working range and/or interference pattern stays the same when varying the distance between the first and second optical elements.

In a preferred embodiment, the system further comprises a control unit configured to control the illumination area, the control unit preferably being arranged in front of the first optical element. The control unit preferably comprises a configurable aperture. Such an aperture may change the size of the illuminated area while maintaining the local power density with which the optical element is illuminated. The control unit may additionally and alternatively comprise a configurable beam expander. Such a beam expander may change the size of the illuminated area while maintaining the total power with which the optical element is illuminated.

In a preferred embodiment, the laser source is configured to generate a collimated laser beam.

In some embodiments, a central spot may be defined as, for any position on the optical axis beyond the optical system, a projection of the concentric laser beam on a plane perpendicular to the optical axis, wherein the central spot preferably has an approximately circular shape. The centre of the central spot preferably approximately coincides with the optical axis and a radius R₃ of the central spot may be 1 millimetre or less, preferably 200 micrometre or less, more preferably 100 micrometre or less, even more preferably 50 micrometre or less.

The percentage of the total power of the laser beam contained in the central spot may be equal to the power of the laser beam in the area of the central spot divided by the total power of the laser beam passing through the plane in which the central spot is defined. In preferred embodiments, the substantial percentage of the total power of the laser beam is 60%, preferably 75%, and more preferably 90%.

To avoid damaging optical elements outside of the working range, in preferred embodiments of the laser system, in front of and/or beyond the working range, the central spot of the concentric laser beam contains less than the substantial percentage of the total power of the laser beam.

In preferred embodiments, the length of the working range, along the optical axis, is 1 centimetre or more, preferably 5 centimetre or more, more preferably 10 centimetre or more. Additionally and/or alternatively, a distance from the optical system to a start of the working range, along the optical axis, may be 15 centimetre or more, preferably 25 centimetre or more, more preferably 50 centimetre or more.

To be able to effectively use the central focus volume, it may be preferred that the translator is arranged in between the optical system and the central focus volume.

Laser marking systems are preferably configured for marking a surface of an object that is arranged on the optical axis, farther from the optical system than a starting point of the working range, but closer to the optical system than an end point of the working range.

Further details and advantages of the present disclosure will become apparent from the following description of a few exemplifying examples of an optical system. Reference is made to the attached figures, wherein like reference numerals refer to the like elements throughout and in which:
figure 1 schematically shows an embodiment of an optical system that may be comprised by a laser system according to the invention;
figure 2 schematically shows a further embodiment of the optical system|;
figures 3 and 4 show parts of embodiments of laser systems in which the illumination fraction is adaptable;
figures 5a and 5b show parts of embodiments of laser systems;
figure 6 shows transversal aberrations resulting from the laser beam passing through an exemplary embodiment;
figures 7A and 7B show schematic representations of further embodiments of laser systems according to the invention;
figures 8A and 8B show perspective views of further embodiments of laser systems according to the invention;
figure 9 show a cross-section of the interference pattern that occurs in the laser beam after the laser beam has exited an optical system comprised by a laser system according to the invention;
figures 10a-d each show other cross-sections of the interference pattern shown in figure 10;
figure 11 shows the percentage of power encircled by the central spot along the optical axis for various radii of the central spot;
figure 12 shows the percentage of power encircled by the central spot along the optical axis for various illumination areas;
figure 13 shows the percentage of power encircled by the central spot along the optical axis for various inter-lens distances D1;
figure 14 shows the graphs of figure 13, realigned in the direction of the x-axis such that their maximum values coincide;
figure 15 shows a comparison between an interference pattern provided by a laser system according to the invention and a laser beam provided by a system known from the art;
figure 16 illustrates that a second optical element configured to introduce further spherical aberrations can be used to create a focus volume having relatively large working range, compared to optical system using only a single optical element.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation. Furthermore, where a range of values is provided, it is understood that each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges may independently be included in the smaller ranges and are also encompassed within the invention, subject to any specifically excluded limit in the stated range. Where the stated range includes one or both of the limits, ranges excluding either or both of those included limits are also included in the invention. Certain ranges are presented herein with numerical values being preceded by the term "about" or " approximately". These terms are used herein to provide literal support for the exact number that it proceeds, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Generally, a laser beam travels along an optical axis in a more or less linear manner - light can be assumed to travel in a straight line in the scale of the application - and because light is received at one point of an optical system and is emitted from another, possibly different point of optical system, the skilled person can derive the general path that laser beam traverses through the optical system. Therefore, some point A on this path can be said to be 'in front of' some point B if light from the received laser beam travels along point A before traveling along point B. Similar statements may be made regarding elements of optical system 1 or parts of the aforementioned interference pattern: Their relative positions may be described using the intended direction with which the laser beam travels through the optical system.

In the present disclosure, a 'central spot' is an area containing laser light, the area being defined in a plane perpendicular to the optical axis of an optical system, and intersecting the optical axis at a particular point. The skilled person will understand that the central spot may be said to be at that point on the optical axis, even though when considering the central spot in three dimensions, not all points are. The central spot may be an approximately circular area, but may also have a different shape, like a square or an ellipse. In the present disclosure approximately circular central spots may be characterized by their radius. A "central spot of 50 micrometres" may refer to a central spot having an approximately circular shape with a radius of 50 micrometres.

There may be power "inside the central spot" when (part of a) laser beam travels through the central spot. This power may be expressed in either absolute or relative units. Alternatively, the application may state that power is 'contained' in, or 'included' in the central spot, or that power is 'encircled' by the central spot. The same concept is referred to each time. Alternatively, the application may refer to an amount of power at a particular point on the optical axis. The skilled person will understand that this then refers to the power in a central spot and that this central spot is associated with a specific position on the optical axis.

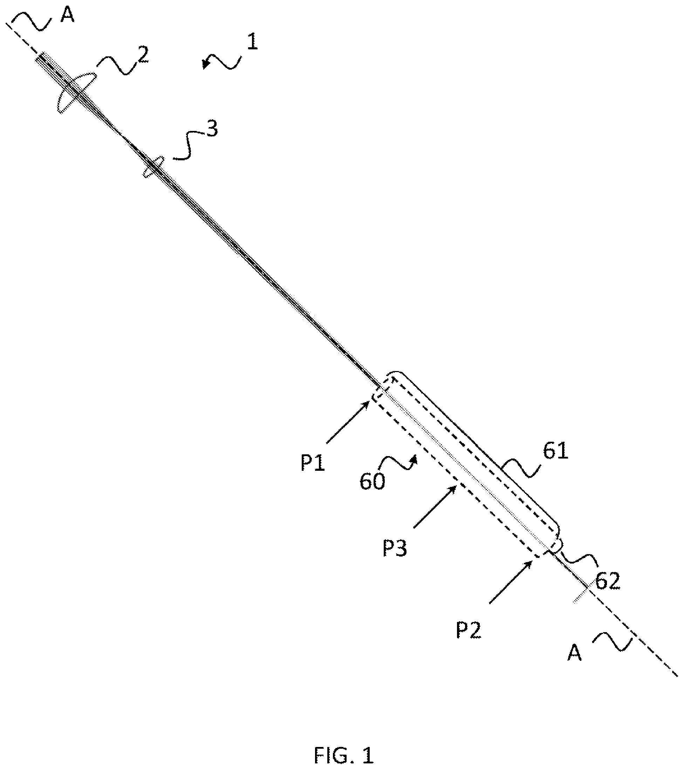

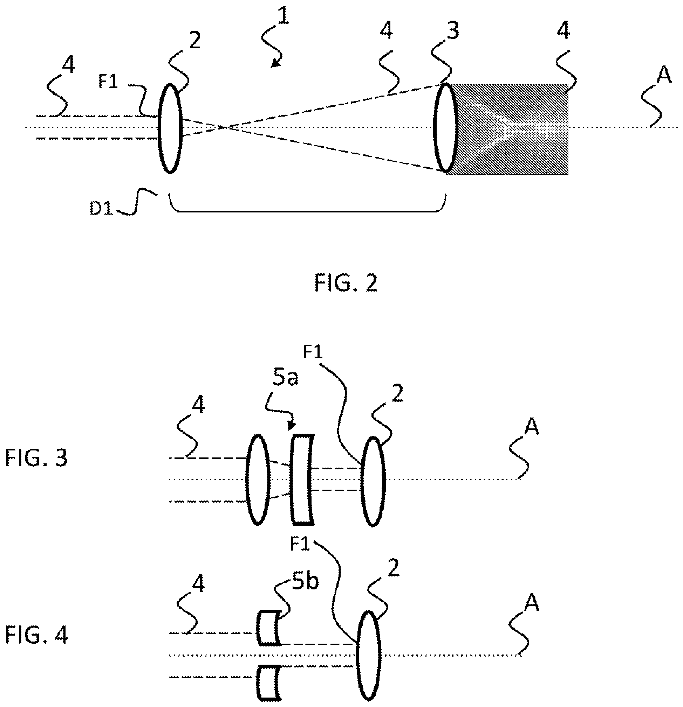

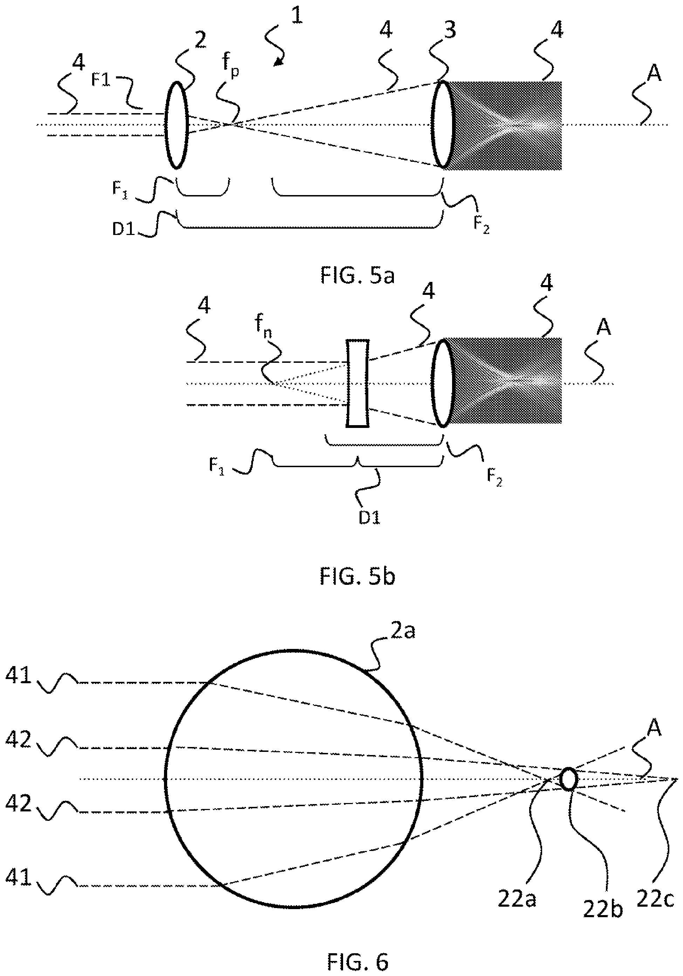

Reference is now made to figures 1-6, wherein figure 1 is a side view in perspective, figures 2 and 5 are a longitudinal cross-sections and figures 3, 4, and 6 are magnifications of parts of an exemplifying embodiment of a laser system according to the invention. In this embodiment, optical system 1 comprises a first spherical lens 2, and - arranged at an inter-lens distance D1 from lens 2 - a second spherical lens 3. Both are arranged with their respective optical centres along a common optical axis A. Optical system 1 is arranged to receive a laser beam 4 from a (not-depicted) laser source. The laser beam 4 from the laser source extends parallel to the optical axis A and consequently may be stated to be received by the optical system 1 along the optical axis A. In the shown embodiment the laser light received from the laser source and impinging on the spherical surface of the first spherical lens 2 is a collimated laser beam. However, a perfectly collimated laser beam is not always necessary. It is also possible to use a diverging laser beam to illuminate the spherical lens. The effect of the first spherical lens 2 on the incoming collimated laser beam can be described as introducing spherical aberrations into the wave front of the laser beam or as different phase shifts which are introduced in different parts of (the light included in) the laser beam. The laser beam exiting the optical system 1 has been shaped by the optical system 1 in such a manner (to be described later) that at a certain distance from the optical system an interference pattern is created. The created interference pattern is such that a central spot is formed along a considerable length of the optical axis A. Furthermore, when the power intensity is defined as the amount of power per unit of area of the laser light propagating through an imaginary plane perpendicular to the optical axis A and at an arbitrary position within a working range of positions, the optical system is configured to provide a power intensity (density) through a perpendicular plane at each position in the central focal zone that is more than a predefined minimum percentage of the total power intensity (i.e. the power intensity through the entire plane).

First spherical lens 2 is configured to introduce spherical aberrations into the laser beam. The first spherical lens 2 is just one possible embodiment of the first optical element required to introduce these spherical aberrations. First spherical lens 2 can be made of any one of the numerous available materials. A material may be chosen depending on a refractive index (e.g. around 2, or less than 2) and/or transmission range corresponding to a wavelength of the laser beam. Some materials that may be suitable are Amtir- 1 Ge33 As12 Se55 Glass, Barium Fluoride (BaF2), Potassium Bromide (KBr), Caesium Iodide (CsI), Potassium Chloride (KCl), Cadmium Telluride (CdTe), Silicon (Si), High Resistivity Silicon (Si), Calcium Fluoride (CaF2), Gallium Arsenide (GaAs), Sodium Chloride (NaCl), Sodium Chloride (NaCl), Germanium (Ge), Thallium Bromoiodide KRS-5 (TlBr-TlI), Zinc Selenide Laser Grade (ZnSe CVD), Zinc Sulfide Cleartran (ZnS), infrared plastic. Other suitable materials may also be used.

In further embodiments, the first optical element may be implemented by any other specific implementation well known to the skilled person. The first optical element may for example be embodied by a spherical mirror. Such a mirror may comprise a substrate of fused silica, N-BK7, copper, or any other suitable material. The substrate may be coated with any one or more of the following coatings: an E-coating from Thorlabs (E01, E02, E03, E04), Dielectric, UV-Enhanced Aluminium, Protected aluminium, Ultrafast-enhanced silver, Protected silver (P01), Protected silver (P02), (Protected) gold, MIR Enhanced gold, Unprotected gold. Single-Crystal GaAs/AlGaAs.

Second spherical lens 3 is also configured to introduce spherical aberrations into the laser beam. Second spherical lens 3 may further ensure that, when exiting optical system 1, the laser beam converges, resulting in the generation of an essentially non-diffractive beam. In the context of the application, a laser beam is considered non-diffractive if, as the laser beam propagates, it does not diffract and spread out. The skilled person will appreciate that no practical implementation can result in a laser beam that is perfectly non-diffractive and in the context of the application, it should further be understood that a laser beam is considered non-diffractive if, as the laser beam propagates, it diffracts and/or spreads out only minimally.

Second spherical lens 3 may be implemented using a condensing lens. In further embodiments, the second optical element may be implemented by a mirror, or prism provided with reflecting surfaces. The skilled person will appreciate that the aforementioned inter-lens distance D1 could then be referred to as just 'distance D1' or inter-element distance D1, or any other suitable name for the same concept that does not rely on the wording 'lens'.

In figure 1, the requirement that the central spot has to contain at least a substantial percentage of the total power of the laser beam is fulfilled for a range of points on the optical axis also referred to as a working range 61. Working range starts from point P1 and ends at point P2. The length of the working range is also referred to as the focus depth. The set of central spots with radius 62 over working range 61 together define a working volume or central focal zone 60. For some embodiments, laser beam 4 may more specifically be said to be essentially non-diffractive over working range 61.

The applicant finds that power may be encircled by a central spot within the working range regardless of the exact shape and/or distribution. The illumination pattern seen within the central spot may comprise one central area, one central ring, one central area and one or more rings, or one or more rings in itself.

Additionally, an ideal spot P3 may be defined in working range 61 and/or between P1 and P2. Spot P3 may be defined in a number of ways. It may for example be the point on the optical axis in which the central spot contains the largest percentage of power. Alternatively, it may be that point in which the substantial percentage of the total power is encircled by the smallest possible central spot.

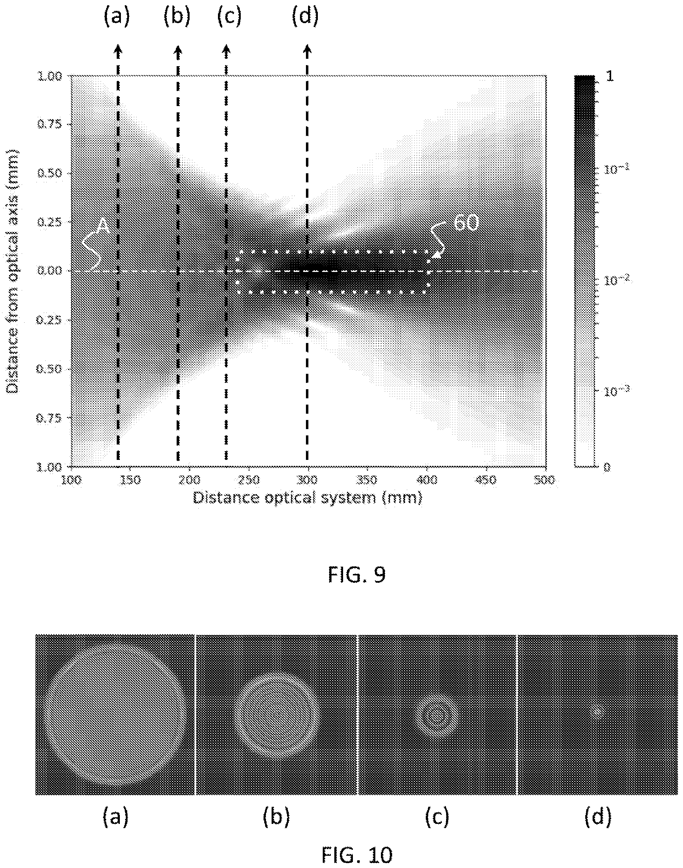

An example of the interference pattern, or at least a cross-section thereof, is shown in figure 9. The cross-section shown is one in a plane spanned by the optical axis and a vector perpendicular to the optical axis. This cross-section of the interference patterns may also be referred to as a sideview.

Referring more specifically to figure 2, the area of first spherical lens 2 illuminated by laser beam 4, hereafter referred to as illumination area F1, as well as the distance between first spherical lens 2 and second spherical lens 3, hereafter referred to as inter-lens distance D1, are indicated. The illumination area and inter-lens distance (herein also referred to as the input factors F1 and D1) may be varied to appropriately configure the optical system 1 so as to shape the interference pattern such that the central spots over the entire working range (i.e. the laser beam in the central focus volume 60) contains at least a substantial percentage of the total power of the laser beam.

Illumination area F1 may be described in a number of ways. In some embodiments, laser beam 4, before entering optical system 1, has an approximately circular cross-section in a plane perpendicular to the optical axis (herein also referred to as the perpendicular cross-section). The centre of this circular cross-section may approximately coincide with optical axis A. Alternative shapes that a perpendicular cross-section may have is square, triangular, or other regular two dimensional polygons.

When the perpendicular cross-section is circular, the skilled person can derive how the illumination area F1 may be described using the radius of said circular cross-section. The outer radius of F1 is illuminated by the most outer rays of laser beam 4 (also referred to as the marginal rays). By mentioning that the marginal rays arrive at first spherical lens 2 at that distance from optical axis A (assuming a relatively contiguous cross-section for laser beam 4) the skilled person will understand that light also arrives at first spherical lens 2 at distances from the optical axis smaller than that radius (i.e. rays closer to optical axis A than the marginal rays).

The applicant finds that even if laser beam 4 has a cross-section not completely contiguous, or not completely circular, that laser beam 4 may still be described based on the distance that the marginal rays have with respect to optical axis A when arriving at first spherical lens 2. In such embodiments, the term 'radius' therefore may refer to the distance the marginal rays have to optical axis A when arriving at first spherical lens 2.

The laser system may comprise means for controlling the illumination area F1. Specifically, optical system 1 may comprise means for controlling the diameter of the input laser beam 4. Referring to figure 3, means for controlling the illumination area F1 are embodied as a beam expander, preferably an adaptable beam expander 5a. Figure 4 further shows laser beam 4 being received along optical axis A, travelling through expander 5a and onto first spherical lens 2. By changing the mutual distance between the two lenses of expander 5a, the radius of laser beam 4 when exiting expander 5a may be changed without changing the total power of laser beam 4. In figure 4 the means for controlling the illumination area F1 is embodied as an aperture, preferably adaptable aperture 5b. Similar to figure 3, figure 4 shows laser beam 4 being received along optical axis A, partially traveling through aperture 5b, and onto first spherical lens 2. By changing the radius of the aperture, the radius of laser beam 4 when passing through aperture 5b may be changed without changing the local power density of those parts of spherical lens 2 still illuminated.

Inter-lens distance D1 may be defined in a number of ways. One way is elucidated in figure 5a. Figure 5a shows first spherical lens 2 embodied by a positive lens of which the focal point fₚ positioned at a distance from first spherical lens 2 corresponding to the focal length F₁. Figure 5 further shows second spherical lens 3 of which the focal point is positioned at a distance from the second spherical lens 2 corresponding to the focal length F₂

The inter-lens distance D1 may be measured from the optical centre of the first spherical lens, up to the optical centre of the second spherical lens. This allows for exchanging the lenses with other appropriate lenses, without having to compensate for the physical dimensions of the lens (such as the shape, and/or size) for so far as these do not change the aforementioned focal points.

To ensure convergence of laser beam 4 when exiting optical system 1, first spherical lens 2 and second spherical lens 3 may be spaced apart by an inter-lens distance D1 larger than focal length F₁ plus focal length F₂.

Alternatively spherical lens 2 may be embodied by a negative lens as shown in figure 5b. The focal point of the negative spherical lens fₙ is positioned at a distance from first spherical lens 2 corresponding to the focal length F₁. In this embodiment, convergence of laser beam 4 is ensured by positioning first spherical lens 2 and second spherical lens 3 spaced apart by an inter-lens distance D1 larger than a difference between focal length F₁ and focal length F₂.

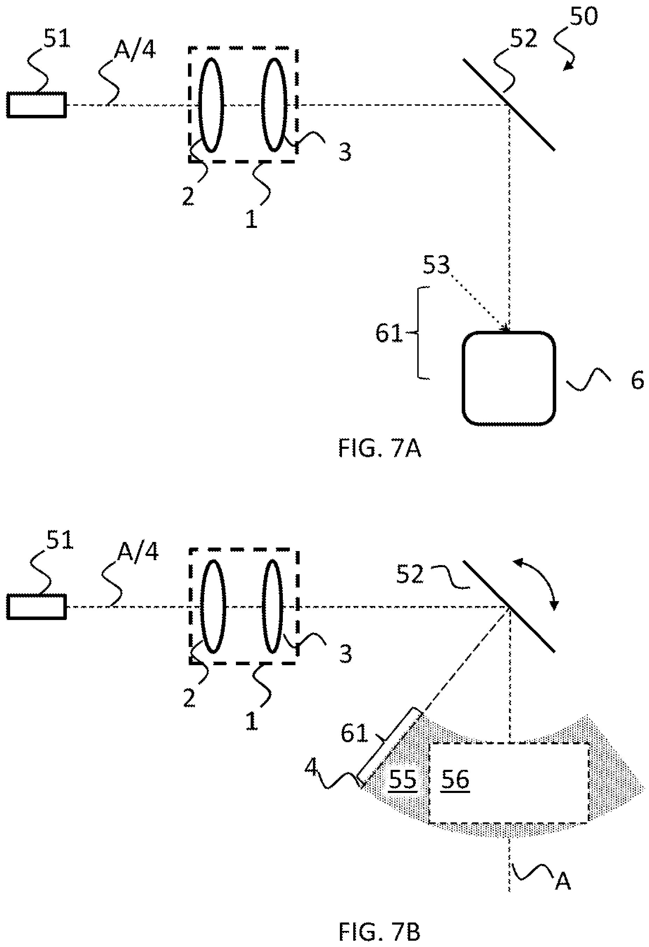

The skilled person will be aware that the first spherical lens 2 does not literally focus laser beam 4 on a single point along the optical axis but that the spherical aberrations spread out these points. One embodiment by which this may be well elucidated, is when the first spherical lens is implemented as a ball lens 2a, as shown in figure 7. As is elucidated in figure 7, ball lens 2a does not focus all of laser beam 4 onto a single point. Instead, marginal rays 41 of laser beam 4 (being the rays of laser beam 4 which arrive at ball lens 2a the farthest from optical axis A from all rays of laser beam 4) are focussed on a closest focal point (22a). Paraxial rays 42 of laser beam 4 (being rays of laser beam 4 which arrive at ball lens 2a closest to, but not quite on, axis A) are focussed on a farthest focal point (22c). The point on the optical axis where laser beam 4 is the narrowest is referred to as the circle of least confusion 22b.

In the application, when the focal point of a spherical lens is discussed, this may refer to a closest focal point 22a. No (substantial amount of) rays of laser beam 4 cross axis A before the closest focal point.

Focal point of ball lens 2a or spherical lens 2 may also refer to the circle of least confusion 22b, or farthest focal point 22c.

Furthermore, when the focal point of ball lens 2a or any other spherical lens is discussed, it may also be an approximation in which this lens just has one focal point. The applicant finds that the distance between closest and farthest focal point (also referred to as transversal aberrations) is rather small in comparison to D1. Additionally, the transversal aberrations are rather small in comparison to the variations possible in D1. Even for configurations in which the illumination area F1 is large, and/or when the radius of laser beam 4 when illuminating ball lens 2 is large, and/or, when the distance between marginal rays 41 and paraxial rays 42 is relatively large. Therefore the abovementioned approximation may be assumed valid for the present application.

Optical system 1 may achieve working ranges - i.e. focus depths - which are at least 10, preferably 100 times as long or longer than the transversal aberrations generated by first spherical lens 2. Additionally, optical system 1 may achieve distances between optical system 1 and the start of range 61 which are at least 10, preferably 100 times as long or longer than the distance between the optical centre of first spherical lens 2 and at least one of the focal point of first spherical lens 2, or at least any one of the closest focal point 22a, circle of least confusion 22b, or farthest focal point 22c of first spherical lens 2.

Referring to figures 7A& 7B, schematic representations of a laser system 50 according to an exemplifying embodiment is shown. Laser system 50 comprises a laser source 51, an optical system 1, and a deflector 52. In the embodiment shown, the laser system 50 is configured for illuminating an illuminated area 53 on a surface of an object 6. The skilled person will appreciate that illuminating an object and marking an object are sufficiently related for them to be used synonymously. The difference being that to mark an object (i.e. to a apply an essentially permanent, visible mark on or in the object by locally heating or ablating the object's surface under the influence of the impinging laser beam), it has to be illuminated for a minimum amount of time, in which said amount of time depends on the power of the laser and/or the material of the object. Alternatively, or additionally, the laser system 50 and/or optical system 1 as described herein could be used for other or further applications, e.g. processing of an object arranged at least partially within the working range or central focus volume of the laser beam.

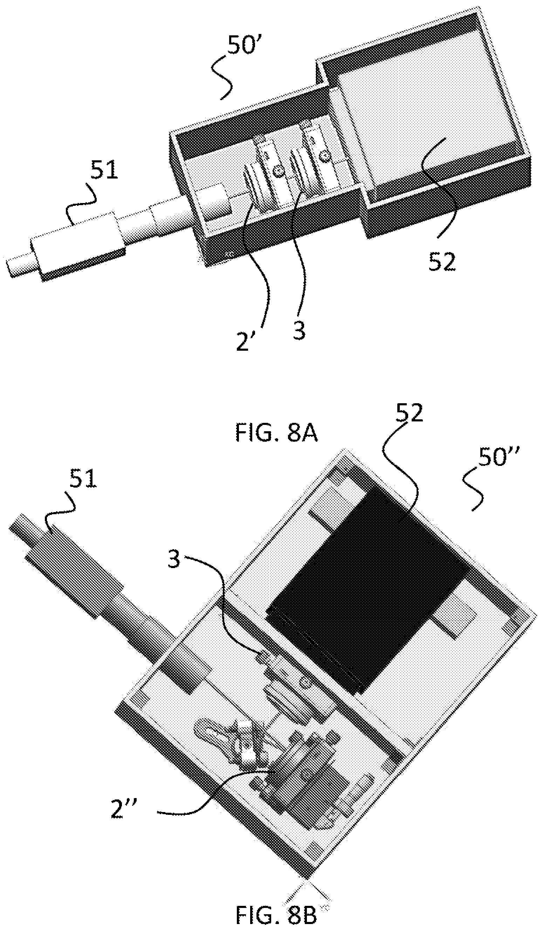

Figures 8A and 8B show perspective views of such laser systems. Specifically, in system 50' shown in figure 8A the first optical element is implemented as a first positive lens 2' and in system 50" shown in figure 8B the first optical element is implemented as a concave mirror 2".

Laser source 51 is configured to emit a laser beam 4 along an optical axis A. Optical system 1 is arranged along axis A. A deflector 52 is also arranged along axis A, at a position beyond optical system 1, and is configured to deflect laser beam 4.

In this embodiment, optical system 1 comprises a first spherical lens 2 and a second spherical lens 3. Both are arranged along an optical axis A. Optical system 1 receives a laser beam 4 along axis A and creates an interference pattern in laser beam 4 such that, after leaving optical system 1, a central focus volume contains at least a substantial percentage of the total power of the laser beam over a working range 60.

To illuminate object 6, said object may be arranged on optical axis A, in the working range of laser system 60. Preferably, the surface of object 6 that is to be illuminated/marked may be substantially perpendicular to optical axis A. However, in other embodiments the surface to be marked extends at an angle relative to the direction of the optical axis.

The length of the working range 60 and/or central focus volume 61 - also referred to as the focus depth - determines the margin of error with which targets may be positioned. For example, object 6 may be arranged on optical axis A such that the surface to-be illuminated is positioned about halfway of the working range (as shown in figure 1). Or, such may be the intention. Due to reasons known to the skilled person, an object to be marked may accidently be arranged closer to the optical system or farther away. In this example, object 6 may be arranged up to half the length of working range 61 forward and/or backward, relative to the intended halfway position. Object 6 would then still be illuminated by the part of laser beam 4 forming working range 61. That is, laser beam 4 would still illuminate object 6 sufficiently to apply the marking to the object's surface. In other words, as long as the object is positioned within the working range of the laser marking system, the laser beam 4 will may still illuminate area 53 of object 6 in an accurate manner.

Additionally, the length of working range 60 defines the width of the area that may be accurately marked. In an example, laser beam 4 is said to be emitted through a centre if it arrives at object 6 at a ninety-degree angle (in which case laser beam 4 coincides with optical axis A up to object 6, as is the situation shown in figure 7A). Similarly, laser beam 4 is said to be emitted 'off centre' if it arrives at object 6 at an angle different from ninety degrees. When the deflection angle by which laser beam 4 is deflected off-centre (i.e. away from axis A, as is the situation shown in figure 7B) increases, so does the distance between deflector 52 and illuminated area 53. A sufficiently large deflection angle will result in the distance between deflector 52 - and optical system 1 - and the illuminated area 53 becoming larger than the distance between deflector 52 and the end of working range 60. Consequently, when laser beam 4 is deflected at this sufficiently large deflection angle, object 6 is illuminated by a part of laser beam 4 outside of working range 60 and thus illuminated inaccurately.

Based on the deflection angle only, laser beam 4 can be said to be able to illuminate object 6 accurately in area 55. The skilled person will appreciate that the semi-circular arc shape of full marking area 55 may be parametrized by an inner radius and an outer radius, and that the difference between these radii corresponds to the length of the working range 60. Marking area 55 is further parametrized by a maximum angle by which deflector 52 may deflect laser beam 4. Alternatively, it may be said that providing a laser beam 4 having a longer working range (i.e. longer focus depth 61) will also provide for a larger marking area 55.

This semi-circular arc shape does not correspond to the shape of surfaces commonly illuminated such as a flat surface. Consequently, for illuminating/marking a flat surface, not all parts of the full marking area 55 can be effectively used. That is, in a more practical sense, it may be said that working range 60 may be used over effective projection area 56, being a sub area of full projection area 55. As shown in figure 7B the effective projection area 56 may be a rectangle. Similarly to marking area 55, the longer focus depth will provide a taller and wider effective projection area.

In this example, deflector 52 deflects laser beam 4 in just one direction, but additional deflectors may be present allowing for deflecting laser beam 4 in two dimensions. In this case, working range 60 may be used to mark a surface of object 6 over a projection volume instead. Deflector 52 may be embodied by one or more rotatable mirrors, and/or by one or more prisms.

For this projection volume, and an effective projection volume therein, similar results can be achieved as explained for the marking areas 55, 56. In the art this effective projection volume is also called a scan-field. Systems known in the art include scanning lenses or f-theta lenses in an effort to increase the size of the scan-field however such elements are not necessary when using a laser system according to the invention.

Having a working range that is positioned farther from laser system 50, or at least farther from deflector 52, means that a surface may be marked faster. That is, for a given change in deflection angle, illuminated area 53 moves a larger distance over the surface of object 6 when object 6 is arranged farther from deflector 52. Since deflectors are commonly limited in their change in deflection angle over time (for example expressed in degree per second) the speed with which the position of illuminated area 53 may change on the surface of object 6 (for example expressed in metre per second) is larger if object 6 is arranged farther from deflector 52.

Some embodiments of laser system 1 may be employed to mark a surface of an object while this object is moving. Objects may for example be arranged on a conveyor. Being able to move laser beam 4 faster, as explained in the above, also allows for marking an object that is passing faster. Additionally, a wider effective marking area and/or effective volume allows for a longer time window to mark an object that is passing the laser marking system at a given speed.

Referring to figure 9, a cross-section of an interference pattern generated by optical system 1 is shown. Specifically, a side view of the interference pattern is shown. That is, the cross-section is one in a plane spanned by the optical axis A and a vector perpendicular to the optical axis A. The cross-section may be a view from the side, but really a view from any angle directly perpendicular to optical axis A. As can be seen, in this interference pattern a small and narrow waist is formed.

Referring to figures 10a-d, other cross-sections of the interference pattern are shown, approximately corresponding to planes perpendicular to and intersecting axis A as indicated in figure 9. That is, the indices a-d shown in figure 9 corresponds to correspondingly enumerated sub-figures 10a-d. As can be seen, in this interference pattern a well defined, central spot with small radius is formed.

As may be derived from the figures 9 and 10a-d, the converging laser beam results in an interference pattern that is different from a Bessel beam. Bessel beams known from the art contain a lot of rings and do not have a lot of power in the central spot. Such Bessel beams are created with an axicon lens that has steep sides. The interference pattern that is created moves with the same angle as the angle of those sides. The spherical lens causes aberrations where the angle of the light is different with respect to the distance the rays have from the optical axis.

Earlier discussed central focus volume 60 may be determined using at least the following three properties:
First, there is radius 62 of the central spot - i.e. the distance from the optical axis up to which power in the interference pattern is taken into account. This radius may for example be 50 micrometres, 100 micrometres, or 200 micrometres.
Secondly, there is an encircled power threshold - i.e. the amount of power that is considered 'substantial' and/or that has to be included in the central spot for the corresponding point on the optical axis to be considered part of working range 61. This threshold may be expressed in absolute units (e.g. Watt) or as percentage of the total power of the laser beam. This threshold may for example be 50%, 60%, 75% or 90%.
Thirdly, there is the length of the working range. This is also referred to as the focus depth - i.e. the distance between P1 and P2. Conceptually, P1 can also be described as the first point on the optical axis where the power encircled by the central spot is larger than the encircled power threshold and P2 can also be described as the last point on the optical axis where the power encircled by the central spot is larger than the encircled power threshold. This focus depth may for example be 5 centimetres, 10 centimetres, or 25 centimetres.

The skilled person will appreciate that the abovementioned properties by which the working range can be defined are interrelated and that when two of them are chosen, the third property inherently follows from the others.

Hereafter follows an example of how an embodiment, for example one comprising the elements of optical system 1 shown in figure 1, functions.

In an exemplary embodiment, first spherical lens 2 is a positive lens and has a focal length of 35 millimetre and the second spherical lens 3 is also a positive lens and has a focal length of 20 millimetre.

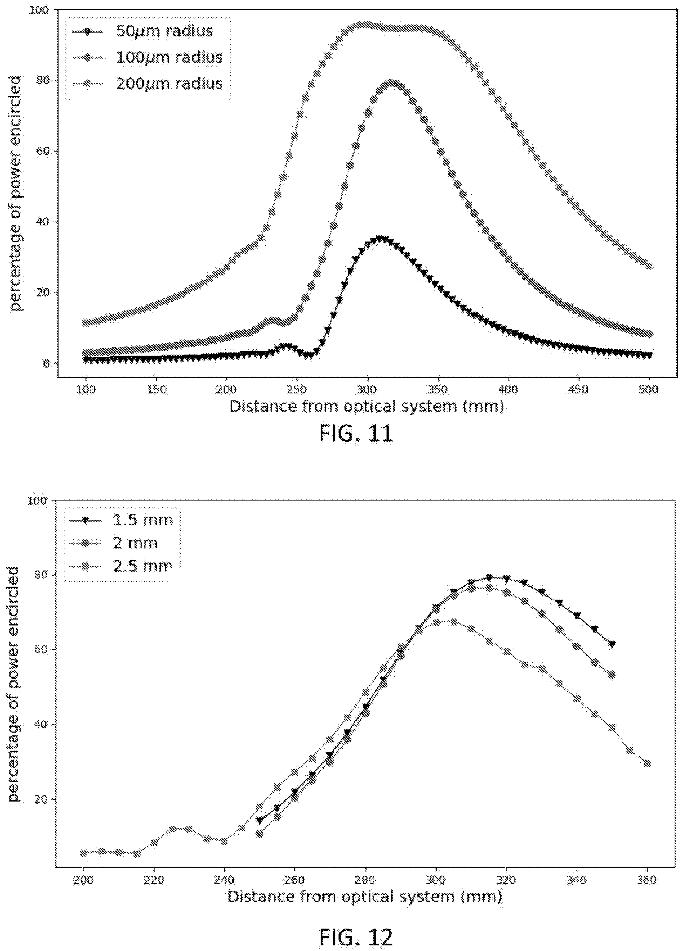

First, a particular radius 62 of the central spot may be chosen. Based thereon, an amount of encircled power along the optical axis can be determined. This is shown in figure 11. Specifically, figure 11 shows, for radii of 50, 100 and 200 micrometre, what percentage of power is encircled by an approximately circular central spot having this radius, on various points on the optical axis. The distance on the x-axis refers to the distance this point has, along the optical axis, from an exit surface of the second spherical lens.

In figure 11, only the radius of the central spot is varied. For each radius, illumination area F1 has a radius of 1.5 millimetre, and inter-lens distance D1 equals 58.5 millimetre.

From figure 11 it can be seen that considering a larger radius for the central spot results in said central spot to encompass a larger percentage of the total power of the laser beam at its highest and also encompass larger percentages of the total power of the laser beam over a longer distance along the optical axis A.

The skilled person will appreciate that this parameter is not one by which optical system 1 itself is configured but just one by which the result achieved thereby is evaluated. Other starting points are possible, but in practise the radius of the central spot is often a requirement (i.e. it has to be at most some value) and a quite stringent one at that. Therefore it cannot always be changed.

What can be used to change the (percentage) of power encircled by the central spot changes over the length of axis A are the earlier indicated parameters illumination area F1 and inter-lens distance D1.

How changing the illumination area F1 affects the encircled power is shown in figure 12 . Specifically, figure 12 shows, for illuminating first spherical lens 2 with laser beams having approximately circular perpendicular cross-sections having radii of 1.5 millimetre, 2 millimetre or 2.5 millimetre, what percentage of power is encircled along optical axis A.

In figure 12, only the illumination area F1 is varied. For each graph, the radius of the central spot is 100 micrometre and inter-lens distance D1 equals 58.5 millimetre.

From figure 12 it can be seen that considering a smaller illumination area results in said central spot to encompass a larger percentage of the total power of the laser beam at its highest and also encompass larger percentages of the total power of the laser beam over a longer range along optical axis A.

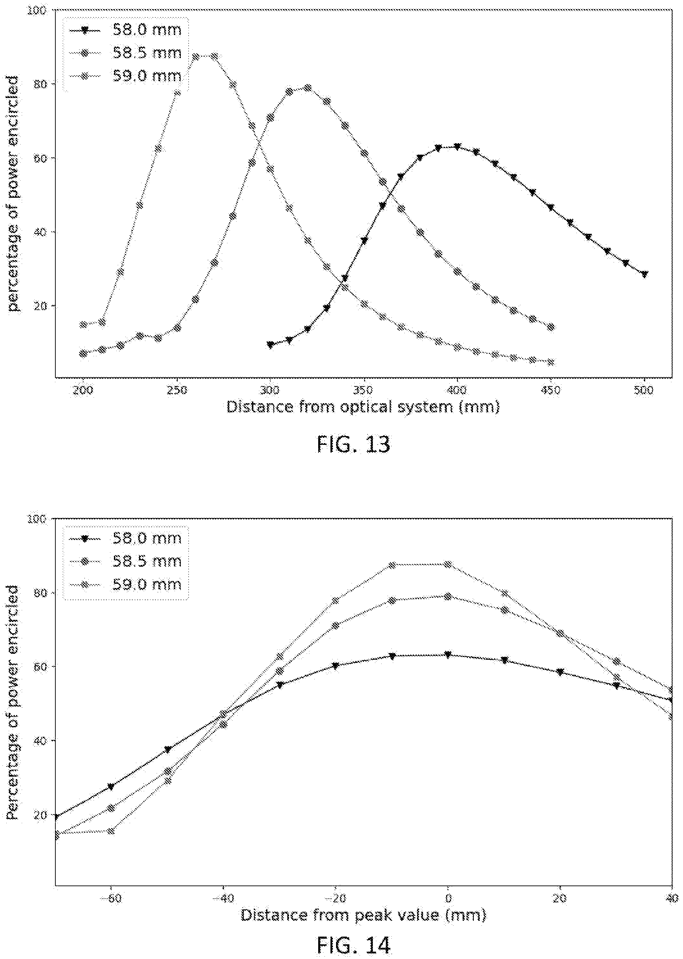

How changing the inter-lens distance D1 affects the encircled power is shown in figures 13 and 14. Specifically, figure 13 shows, for distances D1 of 58 millimetres, 58.5 millimetres, or 59 millimetres, what percentage of power is encircled along optical axis A. Specifically, figure 14 shows the same three peaks as figure 14 (one for each inter-element distance D1) but now these peaks have been mutually displaced such that their maximum values are arranged at the same place on the X-axis.

In figures 13 and 14, only inter-lens distance D1 is varied. For each graph, the radius of the central spot is 100 micrometre and the illumination area F1 has a radius of 1.5 millimetre.

From figure 13 it can be seen that decreasing inter-lens distance D1 results in the central spot to encompass any relevant percentage of the total power of the laser beam much farther from the optical system. Meanwhile, from figure 14 it can be seen that decreasing inter-lens distance D1 results in said central spot to encompass a slightly smaller percentage of the total power of the laser beam at its highest and encompass larger percentages of the total power of the laser beam over a longer range along optical axis A. The peak spreads-out, so to say.

Secondly, a particular enclosed power threshold may be chosen, and the determined amount of encircled power may be compared with this threshold. A working range of a particular length will be the result.

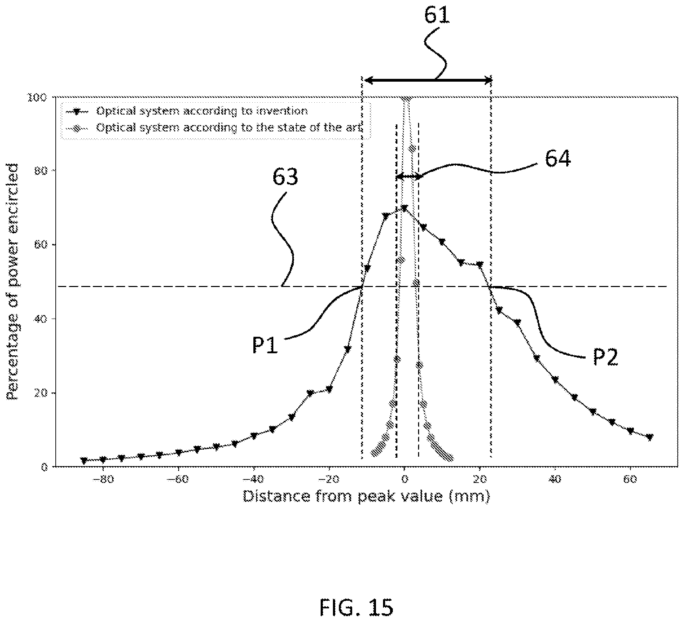

This is shown in figure 15. Specifically, figure 15 shows what percentage of power is encircled along optical axis A in an interference pattern formed by an optical system according to the invention; as well as power encircled along the optical axis in a laser beam provided by a laser system comprising an optical system according to the state of the art. Such an optical system may further comprise a lens arranged to focus a laser, which is also known as a Gaussian focus.

In figure 15, for the optical system according to the invention, the radius of the central spot is 100 micrometres, the inter-lens distance D1 equals 58 millimetres, and the illumination area F1 has a radius of 2 millimetres.

In figure 15, encircled power threshold 63 may be chosen first. The points at which threshold 63 intersects the graph representing the encircled power of the optical system according to the invention are, by definition, points P1 and P2. The distance between P1 and P2 is equal to the focus depth and P1 and P2 define the working range 61 as discussed before. Using a similar approach, a second focus depth 64 of the 'Gaussian' focus may be determined.

Alternatively, a desired focus depth may be chosen and P1 and P2 may be defined as those two points which are the desired distance apart and which have equal encircled powers.

From figure 15 it can be seen that the exemplary embodiment of optical system 1 achieves a slight lower maximum percentage of power encircled along the optical axis and maintains this percentage over a range much longer - i.e. has a focus depth longer - than traditional systems.

In brief, these procedures can be used to directly and positively verify whether in the interference pattern generated using optical system 1 the central focus volume indeed contains at least half of the total power of the laser beam over a working range.

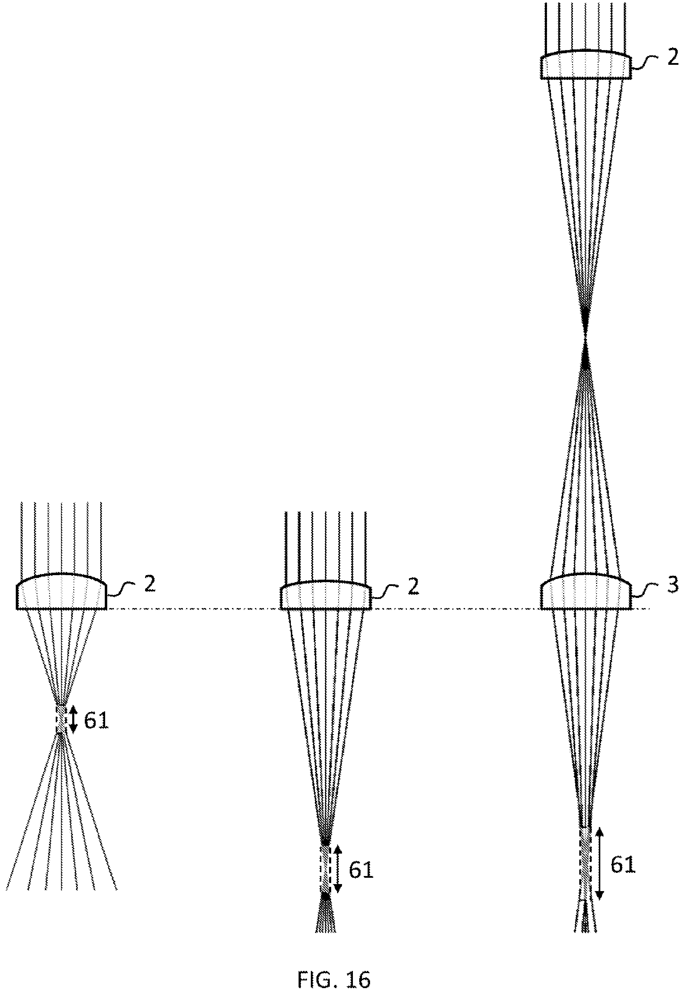

Figure 16 illustrates a comparison between different optical systems having one or more optical elements shaped to introduce spherical aberrations into a light beam.

A first optical system, as illustrated on the left side of figure 16, comprises only a first optical element 2 formed by a relatively strong lens. Typically, a relatively strong lens has a relatively strong curvature, i.e. relatively small radius of curvature. While the strong curvature may help to introduce significant spherical aberrations, the focal distance of a strong lens may be relatively short. Furthermore, an extent of the working range 61 may be limited.

A second optical system, as illustrated in the middle of figure 16, also comprises only a first optical element 2, but in this case formed by a relatively weak lens. Typically, a relatively weak lens has a relatively weak curvature, i.e. relatively large radius of curvature. While, the focal distance and working range 61 may be relatively large for the relatively weak lens of the second optical system, compared to the first optical system, the amount of spherical aberrations introduced into the beam may be limited. This may limit the capability of such a system to create an essentially non-diffractive beam with a focus volume providing an extended working range, as described herein.

A third optical system, as illustrated on the right side, comprises a first optical element 2 and a second optical element 3. In preferred embodiments, as described herein, each of the first optical element 2 and the second optical element 3 is shaped to introduce respective spherical aberrations into the light beam. Most preferably, each of the first optical element 2 and the second optical element 3 has at least one curved optical surface on a side receiving the respective beam. In one embodiment, the first optical element 2 has a spherically curved optical surface facing an initially collimated, e.g. gaussian, beam configured to introduce a first set of spherical aberrations thereby producing an intermediate beam. In another or further embodiment, the second optical element 3 has a spherically curved optical surface facing the incoming intermediate beam. The backside of one or both of the first optical element 2 and second optical element 3 may be flat, as shown here, or also curved to further contribute to the introduction of spherical aberrations. In one embodiment, e.g. as shown, the spherically curved optical surface of the first optical element 2 and/or second optical element 3 is convex, e.g. forming a set of positive lenses. In another or further embodiment, one or more of the spherically curved optical surfaces is concave, e.g. forming a set of negative and positive lenses. Alternatively, or in addition to lenses also (spherical) mirrors can be used to focus the beam.

According to the invention, the system as described herein comprises at least a first optical element 11 having at least one spherical surface introducing a first set of spherical aberrations into the beam, and a second optical element 12 having at least one spherical surface introducing second set of spherical aberrations into the beam, wherein the second optical element 12 is arranged at a distance from the first optical element 11, wherein the different sets of spherical aberrations are tuned to mutually interfere for maximizing a length of the working range 61. Alternatively, or in addition to lenses and/or mirrors having one or more spherical optical surfaces, also other optical elements can be envisaged such as a metalens that can introduce spherical aberrations. Preferably, though not necessarily there is a focus between the first optical element 11 and the second optical element 12. For example, the first optical element 11 is configured to focus the beam at a position before the second optical element 12. This may result in a diverging beam impinging a spherical surface of the second optical element 12 with a relatively large spread in angles, e.g. enhancing spherical aberrations. A desired spread in angles can also be provided in other or further setups, e.g. comprising a combination of negative and positive lens. This may depend on the entrance beam and lens strength. Alternatively, or additionally, the spread of angles can be variable, e.g. set by a controller for determining the spherical aberrations, focal characteristics, and/or other applications.

Without being bound by theory, the inventors find that the use of at least two separate optical elements, each introducing separate spherical aberrations may result in the different aberrations mutually interfering at different positions along the optical axis to produce an extended focal region. In some embodiments, e.g. as illustrated by the third optical system, an optical power of the first optical element 2 and a distance between the first optical element 2 and the second optical element 3 is configured such that, at a position where a front optical surface of the second optical element 3 receives the intermediate beam from the first optical element 2, the intermediate beam is diverging, i.e. a diverging beam comprising predominantly or exclusively light rays which diverge away from the optical axis. The inventors find that by introducing spherical aberrations in a first optical element, letting the resulting intermediate beam diverge before hitting a second optical element, and introducing further spherical aberrations in the second optical element, an advantageous non-diffractive focussed beam can be produced. Furthermore, by placing the second optical element in the diverging intermediate beam produced by the first optical element, the second optical element can cast the focus at a relatively large distance beyond the second optical element resulting in further increase of the focal length as well as enabling advantageous applications such as providing sufficient room for laser marking various targets.

In some embodiments, e.g. as shown, the focus volume forming the working range 61 is formed in an optical path (directly) behind the last spherically curved optical element, e.g. behind the second optical element 3, as shown. Preferably, there are no further curved optics such as lenses or curved mirrors there between. By avoiding further curved optics there between the spherical aberrations, e.g. produced by tuning the spherical shapes of the first optical element 2 and second optical element 3, can be preserved. In particular, it is preferable to avoid having the further curved optical elements, such as an f-theta lens, between a beam steering optics (e.g. deflector 52 in figures 7A and 7B) and the working range 61 (e.g. the object 6). In this way it can be avoided that the spherical aberrations and/or focusing characteristics carefully introduced, e.g. by the first optical element 2 and second optical element 3, are affected in an unpredictable or difficult to control manner by a variable curvature encountered by a changing position of the beam on the curved surface of a further curved optical elements.

For the purpose of clarity and a concise description, features are described herein as part of the same or separate embodiments, however, it will be appreciated that the scope of the invention may include embodiments having combinations of all or some of the features described. The various elements of the embodiments as discussed and shown offer certain advantages, such as providing a relatively large focal depth or working range. The inventors find this particularly beneficial for the applications of laser marking. However, it is to be understood that this disclosure is not limited to particular aspects or examples described, and, as such, may vary. For example, the laser system and/or optical components described herein may also provide at least some benefit for other laser processing applications. It is also to be understood that the terminology used herein is for the purpose of describing particular aspects only, and is not intended to be limiting, since the scope of the present disclosure will be limited only by the appended claims.

## Claims

1. A laser marking system (50) for applying a marking on a target surface of an object (6) in such a way that structural damage to the marked object is avoided, the laser marking system comprising:
a laser source (51) configured to generate a laser beam (4);
an optical system (1) comprising
a first optical element (2) configured to receive the laser beam,
wherein the laser source and the optical system are configured to have the laser beam illuminate a predetermined illumination area of the first optical element,
wherein the first optical element is shaped to introduce a first set of spherical aberrations in the received laser beam, resulting in an intermediate beam produced by the first optical element;
a second optical element (3) arranged at a predetermined distance from the first optical element and configured to receive the intermediate beam,
wherein the second optical element is shaped to introduce a second set of spherical aberrations in the received intermediate beam, resulting in the generation of an essentially non-diffractive beam,
wherein the essentially non-diffractive beam converges along an optical axis (A) of the non-diffractive beam to produce a central focus volume extending over a working range (61) along the optical axis, in which at any position along the optical axis, within the working range, the central focus volume contains at least half of the total power of the non-diffractive beam,
wherein the first and second sets of spherical aberrations are tuned to mutually interfere for maximizing a length of the working range; and
a targeting system configured to apply the marking on the target surface of the object while the target surface of the object is positioned in the central focus volume of the essentially non-diffractive beam, wherein the targeting system comprises at least one deflector (52) arranged, on the optical axis, in between the optical system and the central focus volume, so that the working range is formed in an optical path behind the second optical element, without further curved optics such as lenses or curved mirrors there between.

2. The laser marking system of claim 1, configured to move at least one of the non-diffractive beam and target surface during the application of the marking on the target surface.

3. The laser marking system of claim 2, wherein the targeting system is configured to rotate the at least one deflector (52) to deflect the essentially non-diffractive beam with a varying deflection angle, while the target surface being marked is arranged in a marking area (55) parameterized by an inner radius and an outer radius of the working range, as traced by the varying deflection angle.

4. The laser marking system of any of the preceding claims, wherein the central focus volume is determined by an interference pattern produced in the laser beam exiting the second lens, causing the essentially non-diffractive beam to show a concentric ring pattern in the central focus volume varying over the working range along the optical axis.

5. The laser marking system of any of the preceding claims, wherein the second optical element is a positive lens or a concave mirror, and either:
the first optical element is a positive lens or a concave mirror, and the distance between the first optical element and the second optical element is larger than the sum of the focus length of the first optical element and the focus length of the second optical element; or
the first optical element is a negative lens or a convex mirror, and the distance between the first optical element and the second optical element is smaller than the difference between the focus length of the first optical element and the focus length of the second optical element.

6. The laser marking system of any of the preceding claims, wherein the intermediate beam received by the second optical element is diverging.

7. The laser marking system of any of the preceding claims, wherein the first optical element is configured to focus the beam at a position before the second optical element.

8. The laser marking system of any of the preceding claims, wherein each of the first optical element and the second optical element has at least one curved optical surface on a side receiving the respective beam.

9. The laser marking system of the preceding claim, wherein the first optical element has a spherically curved optical surface facing an initially collimated beam configured to introduce the first set of spherical aberrations thereby producing the intermediate beam, and the second optical element has a spherically curved optical surface facing the incoming intermediate beam.

10. The laser marking system of any of the preceding claims, further comprising at least one actuator for controlling the distance, by displacing the first optical element along the optical axis, wherein the laser beam exits the optical system via an exit surface of the second optical element.

11. The laser marking system of any of the preceding claims, further comprising a control unit, configured to control the illumination area, the control unit being arranged in front of the first optical element, wherein the control unit comprises a configurable aperture and/or a configurable beam expander.

12. The laser marking system of any of the preceding claims, wherein, for any position on the optical axis beyond the optical system, a projection of the concentric laser beam on a plane perpendicular to the optical axis shows a central spot, wherein the central spot has an approximately circular shape, wherein a centre of the central spot approximately coincides with the optical axis,

13. The laser marking system of claim 11, wherein a radius of the central spot is 200 micrometre or less, preferably 100 micrometre or less, more preferably 50 micrometre or less, wherein a percentage of total power of the laser beam contained in the central spot is equal to the power of the laser beam in the area of the central spot divided by the total power of the laser beam passing through the plane in which the central spot is defined, wherein the percentage of the total power of the laser beam is 60%, preferably 75%, and more preferably 90%.

14. The laser marking system of any of the preceding claims, wherein the length of the working range, along the optical axis, is 5 centimetre or more, preferably 10 centimetre or more.

15. The laser marking system of any of the preceding claims, wherein the distance from the optical system to a start of the working range, along the optical axis, is 50 centimetre or more.

## Patentansprüche

1. Ein Lasermarkierungssystem (50) zum Aufbringen einer Markierung auf eine Zieloberfläche eines Objekts (6) derart, dass eine strukturelle Beschädigung des markierten Objekts vermieden wird, wobei das Lasermarkierungssystem umfasst:
eine Laserquelle (51), die dazu konfiguriert ist, einen Laserstrahl (4) zu erzeugen;
ein optisches System (1), umfassend
ein erstes optisches Element (2), das dazu konfiguriert ist, den Laserstrahl zu empfangen,
wobei die Laserquelle und das optische System dazu konfiguriert sind, den Laserstrahl eine vorbestimmte Beleuchtungsfläche des ersten optischen Elements beleuchten zu lassen,
wobei das erste optische Element so geformt ist, dass es einen ersten Satz sphärischer Aberrationen in den empfangenen Laserstrahl einführt, wodurch ein von dem ersten optischen Element erzeugter Zwischenstrahl entsteht;
ein zweites optisches Element (3), das in einem vorbestimmten Abstand von dem ersten optischen Element angeordnet und dazu konfiguriert ist, den Zwischenstrahl zu empfangen,
wobei das zweite optische Element so geformt ist, dass es einen zweiten Satz sphärischer Aberrationen in den empfangenen Zwischenstrahl einführt, wodurch ein im Wesentlichen nichtbeugender Strahl erzeugt wird,
wobei der im Wesentlichen nichtbeugende Strahl entlang einer optischen Achse (A) des nichtbeugenden Strahls konvergiert, um ein zentrales Fokusvolumen zu erzeugen, das sich über einen Arbeitsbereich (61) entlang der optischen Achse erstreckt, wobei das zentrale Fokusvolumen an jeder Position entlang der optischen Achse innerhalb des Arbeitsbereichs mindestens die Hälfte der Gesamtleistung des nichtbeugenden Strahls enthält,
wobei der erste und der zweite Satz sphärischer Aberrationen so abgestimmt sind, dass sie miteinander interferieren, um eine Länge des Arbeitsbereichs zu maximieren; und
ein Zielsystem, das dazu konfiguriert ist, die Markierung auf die Zieloberfläche des Objekts aufzubringen, während die Zieloberfläche des Objekts in dem zentralen Fokusvolumen des im Wesentlichen nichtbeugenden Strahls positioniert ist, wobei das Zielsystem mindestens einen Ablenker (52) umfasst, der auf der optischen Achse zwischen dem optischen System und dem zentralen Fokusvolumen angeordnet ist, sodass der Arbeitsbereich in einem optischen Pfad hinter dem zweiten optischen Element gebildet wird, ohne weitere gekrümmte Optiken wie Linsen oder gekrümmte Spiegel dazwischen.

2. Das Lasermarkierungssystem nach Anspruch 1, das dazu konfiguriert ist, während des Aufbringens der Markierung auf die Zieloberfläche mindestens eines von dem nichtbeugenden Strahl und der Zieloberfläche zu bewegen.

3. Das Lasermarkierungssystem nach Anspruch 2, wobei das Zielsystem dazu konfiguriert ist, den mindestens einen Ablenker (52) zu drehen, um den im Wesentlichen nichtbeugenden Strahl mit einem variierenden Ablenkwinkel abzulenken, während die zu markierende Zieloberfläche in einem Markierungsbereich (55) angeordnet ist, der durch einen Innenradius und einen Außenradius des Arbeitsbereichs parametrisiert ist, wie sie durch den variierenden Ablenkwinkel nachgezeichnet werden.

4. Das Lasermarkierungssystem nach einem der vorhergehenden Ansprüche, wobei das zentrale Fokusvolumen durch ein in dem aus der zweiten Linse austretenden Laserstrahl erzeugtes Interferenzmuster bestimmt wird, das bewirkt, dass der im Wesentlichen nichtbeugende Strahl in dem zentralen Fokusvolumen ein konzentrisches Ringmuster zeigt, das über den Arbeitsbereich entlang der optischen Achse variiert.

5. Das Lasermarkierungssystem nach einem der vorhergehenden Ansprüche, wobei das zweite optische Element eine positive Linse oder ein konkaver Spiegel ist und entweder:
das erste optische Element eine positive Linse oder ein konkaver Spiegel ist und der Abstand zwischen dem ersten optischen Element und dem zweiten optischen Element größer als die Summe der Brennweite des ersten optischen Elements und der Brennweite des zweiten optischen Elements ist; oder
das erste optische Element eine negative Linse oder ein konvexer Spiegel ist und der Abstand zwischen dem ersten optischen Element und dem zweiten optischen Element kleiner als die Differenz zwischen der Brennweite des ersten optischen Elements und der Brennweite des zweiten optischen Elements ist.

6. Das Lasermarkierungssystem nach einem der vorhergehenden Ansprüche, wobei der von dem zweiten optischen Element empfangene Zwischenstrahl divergiert.

7. Das Lasermarkierungssystem nach einem der vorhergehenden Ansprüche, wobei das erste optische Element dazu konfiguriert ist, den Strahl an einer Position vor dem zweiten optischen Element zu fokussieren.

8. Das Lasermarkierungssystem nach einem der vorhergehenden Ansprüche, wobei sowohl das erste optische Element als auch das zweite optische Element auf einer den jeweiligen Strahl empfangenden Seite mindestens eine gekrümmte optische Oberfläche aufweist.

9. Das Lasermarkierungssystem nach dem vorhergehenden Anspruch, wobei das erste optische Element eine sphärisch gekrümmte optische Oberfläche aufweist, die einem anfänglich kollimierten Strahl zugewandt und dazu konfiguriert ist, den ersten Satz sphärischer Aberrationen einzuführen und dadurch den Zwischenstrahl zu erzeugen, und wobei das zweite optische Element eine sphärisch gekrümmte optische Oberfläche aufweist, die dem einfallenden Zwischenstrahl zugewandt ist.

10. Das Lasermarkierungssystem nach einem der vorhergehenden Ansprüche, ferner umfassend mindestens einen Aktuator zum Steuern des Abstands durch Verschieben des ersten optischen Elements entlang der optischen Achse, wobei der Laserstrahl über eine Austrittsfläche des zweiten optischen Elements aus dem optischen System austritt.

11. Das Lasermarkierungssystem nach einem der vorhergehenden Ansprüche, ferner umfassend eine Steuereinheit, die dazu konfiguriert ist, die Beleuchtungsfläche zu steuern, wobei die Steuereinheit vor dem ersten optischen Element angeordnet ist und wobei die Steuereinheit eine konfigurierbare Apertur und/oder einen konfigurierbaren Strahlaufweiter umfasst.

12. Das Lasermarkierungssystem nach einem der vorhergehenden Ansprüche, wobei für jede Position auf der optischen Achse jenseits des optischen Systems eine Projektion des konzentrischen Laserstrahls auf eine zur optischen Achse senkrechte Ebene einen zentralen Fleck zeigt, wobei der zentrale Fleck eine annähernd kreisförmige Form aufweist und wobei ein Mittelpunkt des zentralen Flecks annähernd mit der optischen Achse zusammenfällt,

13. Das Lasermarkierungssystem nach Anspruch 11, wobei ein Radius des zentralen Flecks 200 Mikrometer oder weniger, vorzugsweise 100 Mikrometer oder weniger, besonders bevorzugt 50 Mikrometer oder weniger beträgt, wobei ein Prozentsatz der in dem zentralen Fleck enthaltenen Gesamtleistung des Laserstrahls gleich der Leistung des Laserstrahls in der Fläche des zentralen Flecks dividiert durch die Gesamtleistung des Laserstrahls ist, der durch die Ebene hindurchtritt, in der der zentrale Fleck definiert ist, wobei der Prozentsatz der Gesamtleistung des Laserstrahls 60 %, vorzugsweise 75 % und besonders bevorzugt 90 % beträgt.

14. Das Lasermarkierungssystem nach einem der vorhergehenden Ansprüche, wobei die Länge des Arbeitsbereichs entlang der optischen Achse 5 Zentimeter oder mehr, vorzugsweise 10 Zentimeter oder mehr beträgt.

15. Das Lasermarkierungssystem nach einem der vorhergehenden Ansprüche, wobei der Abstand von dem optischen System zu einem Anfang des Arbeitsbereichs entlang der optischen Achse 50 Zentimeter oder mehr beträgt.

## Revendications

1. Système de marquage au laser (50) destiné à appliquer un marquage sur une surface cible d'un objet (6) de manière à éviter un dommage structurel à l'objet marqué, le système de marquage au laser comprenant :
une source laser (51) configurée pour générer un faisceau laser (4) ;
un système optique (1) comprenant
un premier élément optique (2) configuré pour recevoir le faisceau laser,
dans lequel la source laser et le système optique sont configurés pour faire en sorte que le faisceau laser éclaire une zone d'éclairage prédéterminée du premier élément optique,
dans lequel le premier élément optique est formé de manière à introduire un premier ensemble d'aberrations sphériques dans le faisceau laser reçu, ce qui entraîne la production d'un faisceau intermédiaire par le premier élément optique ;
un deuxième élément optique (3) agencé à une distance prédéterminée du premier élément optique et configuré pour recevoir le faisceau intermédiaire,
dans lequel le deuxième élément optique est formé de manière à introduire un deuxième ensemble d'aberrations sphériques dans le faisceau intermédiaire reçu, ce qui entraîne la génération d'un faisceau essentiellement non diffractif,
dans lequel le faisceau essentiellement non diffractif converge le long d'un axe optique (A) du faisceau non diffractif pour produire un volume de focalisation central s'étendant sur une plage de travail (61) le long de l'axe optique où, en toute position le long de l'axe optique dans la plage de travail, le volume de focalisation central contient au moins la moitié de la puissance totale du faisceau non diffractif,
dans lequel les premier et deuxième ensembles d'aberrations sphériques sont accordés pour interférer mutuellement afin de maximiser une longueur de la plage de travail ; et
un système de ciblage configuré pour appliquer le marquage sur la surface cible de l'objet tandis que la surface cible de l'objet est positionnée dans le volume de focalisation central du faisceau essentiellement non diffractif, dans lequel le système de ciblage comprend au moins un déflecteur (52) agencé sur l'axe optique entre le système optique et le volume de focalisation central, de sorte que la plage de travail soit formée dans un chemin optique derrière le deuxième élément optique sans autre optique courbe telle que des lentilles ou des miroirs courbes entre eux.

2. Système de marquage au laser selon la revendication 1, configuré pour déplacer au moins un parmi le faisceau non diffractif et la surface cible pendant l'application du marquage sur la surface cible.

3. Système de marquage au laser selon la revendication 2, dans lequel le système de ciblage est configuré pour faire tourner l'au moins un déflecteur (52) afin de dévier le faisceau essentiellement non diffractif selon un angle de déviation variable, tandis que la surface cible en cours de marquage est agencée dans une zone de marquage (55) paramétrée par un rayon intérieur et un rayon extérieur de la plage de travail telle que tracée par l'angle de déviation variable.

4. Système de marquage au laser selon l'une des revendications précédentes, dans lequel le volume de focalisation central est déterminé par un motif d'interférence produit dans le faisceau laser sortant de la deuxième lentille, faisant en sorte que le faisceau essentiellement non diffractif présente un motif d'anneaux concentriques dans le volume de focalisation central variant sur la plage de travail le long de l'axe optique.

5. Système de marquage au laser selon l'une des revendications précédentes, dans lequel le deuxième élément optique est une lentille positive ou un miroir concave, et soit :
le premier élément optique est une lentille positive ou un miroir concave et la distance entre le premier élément optique et le deuxième élément optique est supérieure à la somme de la longueur de focalisation du premier élément optique et de la longueur de focalisation du deuxième élément optique ; soit
le premier élément optique est une lentille négative ou un miroir convexe et la distance entre le premier élément optique et le deuxième élément optique est inférieure à la différence entre la longueur de focalisation du premier élément optique et la longueur de focalisation du deuxième élément optique.

6. Système de marquage au laser selon l'une des revendications précédentes, dans lequel le faisceau intermédiaire reçu par le deuxième élément optique est divergent.

7. Système de marquage au laser selon l'une des revendications précédentes, dans lequel le premier élément optique est configuré pour focaliser le faisceau à une position précédant le deuxième élément optique.

8. Système de marquage au laser selon l'une des revendications précédentes, dans lequel chacun du premier élément optique et du deuxième élément optique a au moins une surface optique courbe sur un côté recevant le faisceau respectif.

9. Système de marquage au laser selon la revendication précédente, dans lequel le premier élément optique a une surface optique courbe sphérique tournée vers un faisceau initialement collimaté configuré pour introduire le premier ensemble d'aberrations sphériques, produisant ainsi le faisceau intermédiaire, et le deuxième élément optique a une surface optique courbe sphérique tournée vers le faisceau intermédiaire entrant.

10. Système de marquage au laser selon l'une des revendications précédentes, comprenant en outre au moins un actionneur pour commander la distance en déplaçant le premier élément optique le long de l'axe optique, dans lequel le faisceau laser sort du système optique via une surface de sortie du deuxième élément optique.

11. Système de marquage au laser selon l'une des revendications précédentes, comprenant en outre une unité de commande configurée pour commander la zone d'éclairage, l'unité de commande étant agencée devant le premier élément optique, dans lequel l'unité de commande comprend une ouverture configurable et/ou un dilatateur de faisceau configurable.

12. Système de marquage au laser selon l'une des revendications précédentes, dans lequel, pour toute position sur l'axe optique au-delà du système optique, une projection du faisceau laser concentrique sur un plan perpendiculaire à l'axe optique présente une tache centrale, dans lequel la tache centrale a une forme approximativement circulaire, dans lequel un centre de la tache centrale coïncide approximativement avec l'axe optique,

13. Système de marquage au laser selon la revendication 11, dans lequel un rayon de la tache centrale est de 200 micromètres ou moins, de préférence de 100 micromètres ou moins, de manière davantage préférée de 50 micromètres ou moins, dans lequel un pourcentage d'une puissance totale du faisceau laser contenu dans la tache centrale est égal à la puissance du faisceau laser dans la zone de la tache centrale divisée par la puissance totale du faisceau laser passant par le plan où la tache centrale est définie, dans lequel le pourcentage de la puissance totale du faisceau laser est de 60 %, de préférence de 75 %, et de manière davantage préférée de 90 %.

14. Système de marquage au laser selon l'une des revendications précédentes, dans lequel la longueur de la plage de travail le long de l'axe optique est de 5 centimètres ou plus, de préférence de 10 centimètres ou plus.

15. Système de marquage au laser selon l'une des revendications précédentes, dans lequel la distance entre le système optique et un début de la plage de travail le long de l'axe optique est de 50 centimètres ou plus.
